# FASCICULE DE BREVET EUROPEEN

(11) **EP 3 380 366 B1**
(45) Date de publication et mention de la délivrance du brevet: **19.06.2019**
(21) Numéro de dépôt: 16813085.4
(22) Date de dépôt: 25.11.2016
(51) Int. Cl.: B60R 19/48

(54) **DISPOSITIF DE MONTAGE D'UN RADAR POUR VÉHICULE AUTOMOBILE**
VORRICHTUNG ZUR MONTAGE EINES RADARS FÜR EIN KRAFTFAHRZEUG
DEVICE FOR MOUNTING A RADAR FOR A MOTOR VEHICLE

(30) Priorité: 25.11.2015 FR 1561361
(43) Date de publication de la demande: 03.10.2018
(73) Titulaire: Renault S.A.S., 92100 Boulogne-Billancourt (FR)
(72) Inventeur: BIGOT, Anthony, 92140 Clamart (FR); DEL-PINO, Serge, 78180 Montigny Le Bretonneux (FR)
(86) Numéro de dépôt international: PCT/FR2016/053089
(87) Numéro de publication internationale: WO 2017/089720

(56) Documents cités:
- US-A1- 2002 125 383
- US-A1- 2012 007 764
- US-A1- 2013 239 425
- US-A1- 2014 111 370

## Description

La présente invention se rapporte, de manière générale, aux radars pour véhicule automobile et se rapporte plus particulièrement à un dispositif de montage d'un radar.

Par radar, on entend, dans le cadre de la présente description, tout type de détecteur de distance ou d'obstacle monté sur un véhicule.

La plupart des véhicules automobiles sont aujourd'hui équipés de radar d'assistance à la conduite. Afin d'assurer leur fonction, que ce soit aide au stationnement, assistance automatique au freinage d'urgence ou régulation de distance, ils sont préférentiellement positionnés à l'avant du véhicule.

Il est donc nécessaire d'étudier les différentes positions, au plus près de la face avant du véhicule, pouvant accueillir un radar monté sur un support.

US 2002/125383 A1 divulgue un dispositif de montage d'un radar selon le préambule de la revendication 1.

Un des espaces les plus avantageux se situe notamment à proximité du guide d'air. Le guide d'air est un élément du véhicule visant à rediriger l'air extérieur vers le circuit de refroidissement du moteur. L'air entre par une ouverture disposée sur la face avant du véhicule, et est dirigé au travers du compartiment moteur, par un élément de structure du guide d'air, jusqu'à un ensemble dit « valise de refroidissement ». L'ensemble comprend en général un radiateur de refroidissement et un ventilateur électrique.

Généralement, une grille est placée à l'entrée du guide d'air, de façon à éviter l'introduction de corps étrangers et ainsi protéger les pales qui composent le radiateur de refroidissement.

Par ailleurs, pour le montage d'un support radar à proximité du guide d'air, il est nécessaire de prendre les propriétés aérodynamiques de ce dernier en considération. En effet, la modification des éléments de structure du guide et l'agencement du support risquent de modifier ces propriétés.

L'invention a donc pour but de remédier à cet inconvénient et de proposer un dispositif de montage pour radar respectant les contraintes aérodynamiques nécessaires au bon fonctionnement du guide d'air.

Il est ainsi proposé un dispositif de montage d'un radar pour véhicule automobile, comprenant un support sur lequel vient se monter le radar, un premier élément de structure étant positionné au-dessus d'un deuxième élément de structure, une première portion du support étant reliée au premier élément de structure et une deuxième portion du support étant positionnée devant le deuxième élément de structure.

En outre, le deuxième élément de structure comprend une ouverture, le support traversant ladite ouverture.

Avantageusement, l'ouverture correspond à une fente.

De façon plus avantageuse, les éléments de structure sont placés à l'avant du véhicule.

On pourra prévoir que le premier élément de structure corresponde à une traverse s'étendant perpendiculairement à l'axe longitudinal du véhicule.

On pourra également prévoir que le deuxième élément corresponde à un guide d'air destiné à la circulation d'air extérieur vers le compartiment moteur.

Selon un mode de réalisation préféré, l'ouverture est recouverte par au moins une lèvre d'étanchéité, la lèvre étant réalisée en un matériau synthétique souple apte à se déformer, et dont au moins une extrémité est libre, permettant le passage du support du radar au travers de l'ouverture.

De préférence, l'ouverture est recouverte par deux lèvres dont au moins une extrémité de chacune est libre, et dont l'agencement de la première lèvre par rapport à la deuxième lèvre permet le passage du support du radar entre les extrémités libres desdites lèvres.

En outre, le support de radar peut être formé de deux portions parallèles reliées par une troisième portion inclinée.

Avantageusement, le support de radar est fixé au premier élément de structure par l'intermédiaire de moyens de fixation tels que des vis, des boulons ou tout autre moyen équivalent.

Préférablement, le support de radar comprend au moins une encoche destinée au montage du support, dont la largeur permet le passage des moyens de fixation.

D'autres buts, avantages et caractéristiques ressortiront de la description qui va suivre, donnée à titre purement illustratif et faite en référence aux dessins annexés sur lesquels :
- la figure 1 est une vue en perspective de l'avant d'un véhicule comprenant un dispositif de montage d'un support pour radar, selon un mode de réalisation de l'invention ;
- la figure 2 est une vue en perspective de l'avant d'un véhicule comprenant un dispositif de montage d'un support pour radar, selon un second mode de réalisation de l'invention ;
- la figure 3 est une vue en coupe longitudinale de l'avant d'un véhicule comprenant un dispositif de montage d'un support pour radar, selon un troisième mode de réalisation de l'invention ; et
- la figure 4 est une détaillée du support pour radar selon le mode de réalisation de la figure 1.

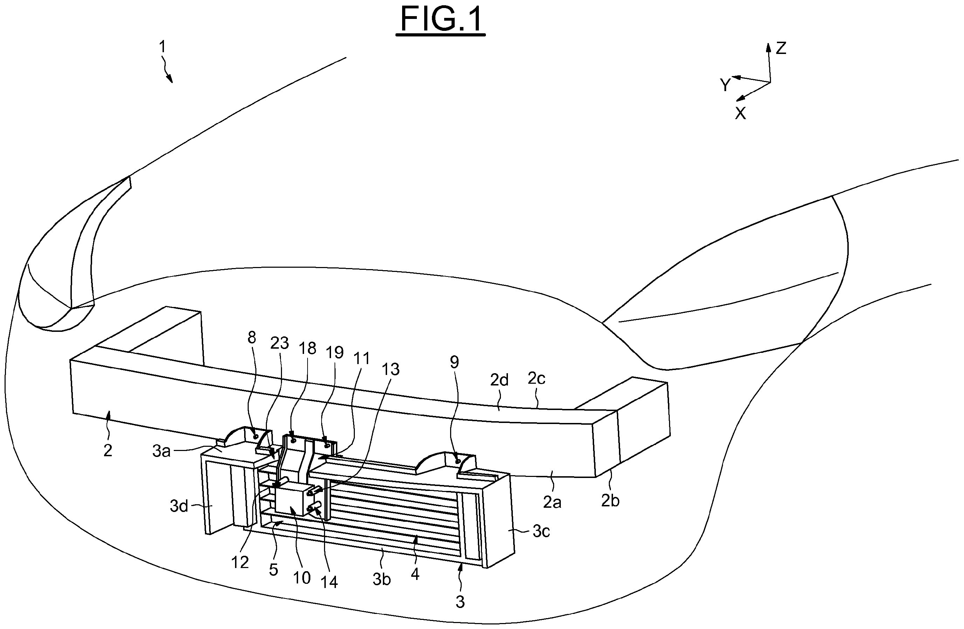

Dans la suite de la description, les termes « longitudinal », « transversal », « vertical », « avant », « arrière », « gauche », « droite », « bas » et « haut » s'entendent par rapport au repère orthogonal usuel des véhicules automobiles, représenté sur la figure 1 à 4, et comprenant :
- un axe longitudinal X, horizontal et dirigé de l'arrière vers l'avant du véhicule ;
- un axe transversal Y, horizontal, perpendiculaire à l'axe X et dirigé de la gauche à la droite du véhicule qui se déplaçant vers l'avant ;
- un axe Z, orthogonal aux axes X et Y et vertical dirigé de bas en haut.

Les figures 1 à 3 représentent la partie avant d'un véhicule 1 comprenant un dispositif de montage d'un support pour radar selon l'invention. Le dispositif comprend un premier et un deuxième élément de structure 2 et 3, correspondant respectivement, dans l'exemple illustré, à une traverse 2 et à un guide d'air 3.

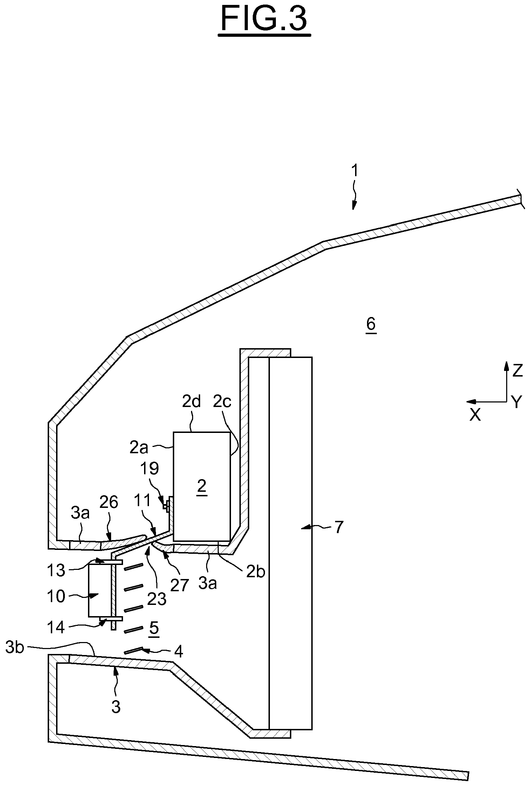

La traverse 2 et le guide d'air 3 peuvent s'étendre transversalement au véhicule, selon l'axe Y. La traverse 2 est positionnée au-dessus du guide d'air 3. Une ouverture 5, visible à la figure 3, destinée à l'entrée d'air extérieur au sein d'un compartiment moteur 6 du véhicule, peut être prévue sur le guide d'air 3. De plus, l'ouverture 5 peut être dotée d'une grille de protection 4 afin d'éviter l'introduction de corps étrangers dans le guide d'air 3.

Dans l'exemple illustré, le guide d'air 3 comprend quatre côtés latéraux 3a, 3b, 3c et 3d. Le côté 3a est disposée au-dessous, et en regard de la traverse 2. Le côté 3b est localisé à l'opposé du côté 3a. Enfin, les côté 3b et 3d correspondent respectivement aux côtés gauche et droit du guide d'air 3. La traverse 2 comprend ici quatre faces 2a, 2b, 2c et 2d. La face 2a est dirigée vers l'avant du véhicule et la face 2c vers l'arrière du véhicule. Les faces 2b et 2d sont respectivement dirigées vers le bas et le haut du véhicule.

Le guide d'air 3 peut être fixé à la traverse 2. Pour cela, le côté 3a du guide d'air 3 peut être fixé à la face 2a de la traverse 2 par des moyens de fixation 8 et 9, tels que des vis ou des boulons.

Dans l'exemple illustré, le guide d'air 3 redirige l'air extérieur vers une valise de refroidissement 7, visible à la figure 3, et destinée au refroidissement du moteur du véhicule.

La partie avant du véhicule 1 comprend également un radar 10 monté sur un support 11. Le radar 10 peut être fixé au support 11 par des moyens de fixation, ici trois 12, 13 et 14, tels que des vis ou des boulons.

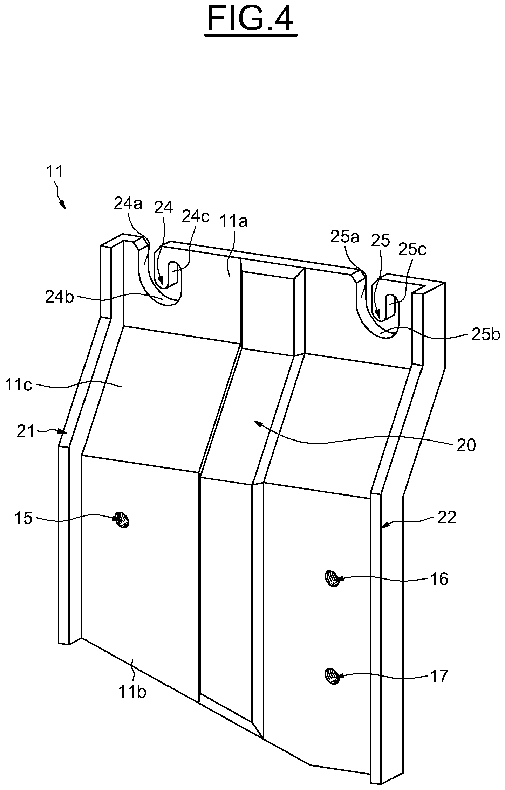

Le support 11, dont une vue détaillée est fournie à la figure 4, comprend des première et deuxième portions 11a et 11b. Ces deux portions 11a et 11b s'étendent, de préférence, verticalement, selon l'axe Z, et sont parallèles.

On pourra également prévoir que le support 11 comprenne une troisième portion 11c qui relie les première et deuxième portions 11a et 11b. Dans l'exemple illustré, la troisième portion 11c s'étend dans un plan incliné par rapport aux plans verticaux des portions 11a et 11b. Ceci permet d'ajuster la forme du support 11 pour un agencement optimal par rapport aux éléments environnants.

Des orifices 15, 16 et 17, aptes à recevoir les moyens de fixations 12, 13 et 14, peuvent être prévus sur la deuxième portion 11b.

Dans l'exemple illustré, le support 11 est aussi pourvu d'un renfort central 20 ainsi que de deux ailettes de renfort latérales 21 et 22. Ces renforts 20, 21 et 22 sont destinés au renforcement du support, et donc à l'amélioration de ses propriétés mécaniques, comme notamment sa rigidité, nécessaire pour un fonctionnement précis du radar 10.

La première portion 11a du support 11 est reliée à la traverse 2. Dans l'exemple des figures 1 à 3, la première portion 11a est fixée sur la face 2a de la traverse 2, par des moyens de fixations 18 et 19 tels que des boulons, de façon à fixer solidement le support sur la traverse 2.

Dans l'exemple des figures 1 à 3, la première portion 11a est donc en contact avec la face 2a de la traverse 2, tandis que la deuxième portion 11b s'étend devant l'ouverture 5 du guide d'air 3, et plus précisément devant la grille 4. La portion inclinée 11c permet de maintenir la portion 11b devant l'ouverture 5, tout en évitant que celle-ci 11b soit en contact avec la grille 4.

A la figure 1, illustrant un premier mode de réalisation du dispositif de montage du radar 10 selon l'invention, on peut voir que la face 3a du guide d'air 3 comporte une ouverture 23. Lorsque la portion 11a du support 11 est fixée à la traverse 2, la portion 11c s'étend au travers de l'ouverture 23.

L'ouverture 23 débouche sur l'avant du véhicule, ce qui facilite le montage du support 11 sur la traverse 2, devant l'ouverture 5 du guide d'air 3. Le montage du support 11 est possible selon l'axe X ou selon Z.

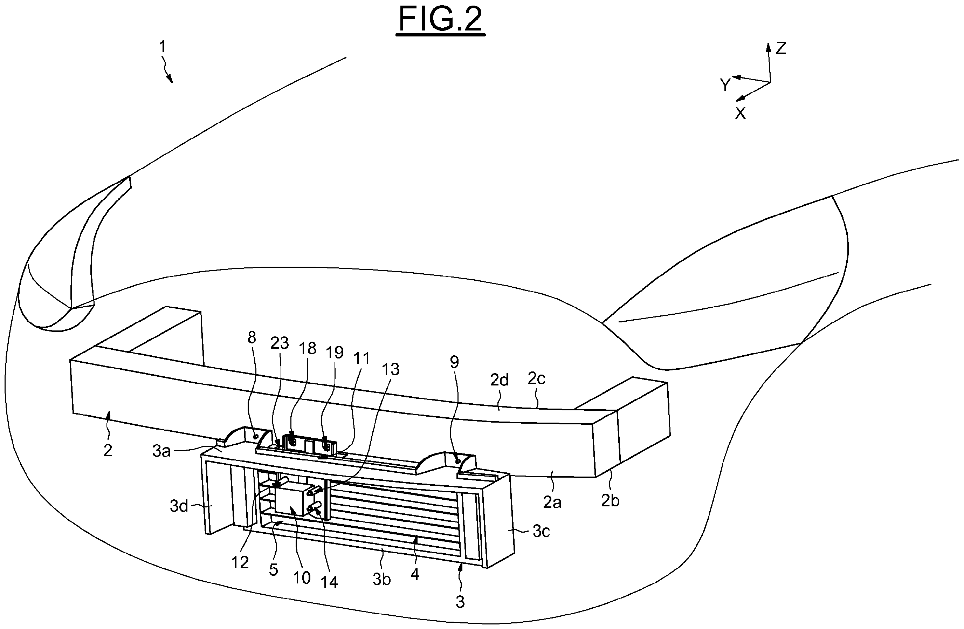

La figure 2 illustre un deuxième mode de réalisation du dispositif de montage du radar 10 selon l'invention. Ce mode de réalisation diffère du premier mode en ce que l'ouverture 23 correspond à une fente, et n'est ainsi plus débouchante sur l'avant du véhicule. L'ouverture 23 est réduite, et les propriétés aérodynamiques sont ainsi améliorées par rapport au premier mode de réalisation.

Ce deuxième mode de réalisation diffère également du premier en ce que, pour la fixation du support 11 à la traverse 2, les moyens de fixation 18 et 19 sont insérés, non pas dans de simples orifices circulaires, comme tel est le cas dans le mode de réalisation illustré à la figure 1, mais dans des encoches 24 et 25, visibles à la figure 4.

Chaque encoche est formée par une rainure rectiligne 24a et 25a, dont une extrémité est débouchante, et l'autre extrémité est reliée à une portion circulaire 24b et 25b.

Dans l'exemple illustré, la largeur réduite de l'ouverture 23 ne permet pas un montage du support 11 selon l'axe X. En revanche l'extrémité débouchante permet l'insertion des moyens de fixation 18 et 19 selon l'axe Z, et facilite donc le montage du support 11 en passant au travers de la fente 23. La largeur des encoches 24 et 25 est adaptée pour recevoir les moyens de fixation 18 et 19.

Pour le montage, une fois que le support est inséré au travers de la fente 23, et lorsque les moyens de fixation 18 et 19 sont respectivement insérés dans la rainure 24a et 25a, le support doit être manoeuvré dans le plan YZ pour que les moyens 18 et 19 glisse le long des portions 24a, 25a et 24b, 25b, jusqu'aux portions 24c et 25c. Lorsque les moyens 18 et 19 sont placés dans les portions 24c et 25c, le support 11 est alors dans une position stable. Les moyens 18 et 19 peuvent alors être manoeuvrés pour assurer la fixation du support 11.

L'extrémité libre de chaque encoche 24 et 25 comprend, dans l'exemple illustré, des bords biseautés, destinés à faciliter l'insertion des moyens de fixations 18 et 19 dans la rainure 24a et 25a.

La figure 3 illustre un troisième mode de réalisation préféré du dispositif selon l'invention. Ce troisième mode de réalisation diffère du deuxième mode en ce que la fente 23 est recouverte par deux lèvres 26 et 27.

Comme illustré, les lèvres 26 et 27 comprennent une extrémité reliée au côté 3a, et une extrémité libre. Les deux extrémités libres sont, de préférence, disposées en vis-à-vis, et permettent le passage du support 11 entre celles-ci. Leur longueur est telle que l'ensemble des deux recouvrent toute la surface de l'ouverture 23.

De préférence, chaque lèvre est réalisée en un matériau souple apte à se déformer, de sorte que le passage du support 11 au travers de l'ouverture 23 soit facilité.

Selon un autre mode de réalisation, l'ouverture 23 pourrait comporter une ou plus de deux lèvres, sans sortir du cadre de l'invention.

La présence des lèvres permet d'obtenir une meilleure étanchéité de la face 3a du guide d'air 3 par rapport aux premier et deuxième modes de réalisation, et ainsi améliorer encore les propriétés aérodynamiques de ce dernier.

Le dispositif de montage du radar 10, monté sur le support 11, selon l'invention, permet de disposer le radar 10 sur la partie avant du véhicule, en altérant le moins possible les fonctions des éléments de structure environnants, et comme dans l'exemple illustré, les propriétés aérodynamiques du guide d'air 3.

## Revendications

1. Dispositif de montage d'un radar pour véhicule automobile, comprenant un support (11) sur lequel vient se monter le radar (10), un premier élément de structure (2) étant positionné au-dessus d'un deuxième élément de structure (3), une première portion (11a) du support (11) étant reliée au premier élément de structure (2) et une deuxième portion du support (11b) étant positionnée devant le deuxième élément de structure (3), **caractérisé en ce que** le deuxième élément de structure (3) comprend une ouverture (23), le support (11) traversant ladite ouverture (23).

2. Dispositif de montage selon la revendication 1, **caractérisé en ce que** l'ouverture (23) correspond à une fente.

3. Dispositif de montage selon l'une des revendications 1 ou 2, **caractérisé en ce que** les éléments de structure (2, 3) sont placés à l'avant du véhicule.

4. Dispositif de montage selon l'une quelconque des revendications précédentes, **caractérisé en ce que** le premier élément de structure (2) correspond à une traverse s'étendant perpendiculairement à l'axe longitudinal X du véhicule.

5. Dispositif de montage selon l'une quelconque des revendications précédentes, **caractérisé en ce que** le deuxième élément (2) correspond à un guide d'air (3) destiné à la circulation d'air extérieur vers le compartiment moteur.

6. Dispositif de montage selon l'une quelconque des revendications précédentes, **caractérisé en ce que** l'ouverture (23) est recouverte par au moins une lèvre d'étanchéité (26, 27), la lèvre (26, 27) étant réalisée en un matériau synthétique souple apte à se déformer, et dont au moins une extrémité est libre, permettant le passage du support (11) du radar (10) au travers de l'ouverture (23).

7. Dispositif de montage selon la revendication 6, **caractérisé en ce que** l'ouverture est recouverte par deux lèvres (26, 27) dont au moins une extrémité de chacune est libre, et dont l'agencement de la première lèvre par rapport à la deuxième lèvre permet le passage du support (11) du radar (10) entre les extrémités libres desdites lèvres (26, 27).

8. Dispositif de montage selon l'une quelconque des revendications précédentes, **caractérisé en ce que** le support (11) de radar (10) est formé de deux portions (11a, 11b) parallèles reliées par une troisième portion (11c) inclinée.

9. Dispositif de montage selon l'une quelconque des revendications précédentes, **caractérisé en ce que** le support (11) de radar (10) est fixé au premier élément de structure (2) par l'intermédiaire de moyens de fixation (18, 19) tels que des vis, des boulons ou tout autre moyen équivalent.

10. Dispositif de montage selon la revendication 9, **caractérisé en ce que** le support (11) de radar (10) comprend au moins une encoche (24, 25) destinée au montage du support (11), dont la largeur permet le passage des moyens de fixation.

## Patentansprüche

1. Vorrichtung zur Montage eines Radars für ein Kraftfahrzeug, umfassend einen Träger (11), auf dem das Radar (10) montiert wird, wobei ein erstes Strukturelement (2) über einem zweiten Strukturelement (3) positioniert ist, wobei ein erster Abschnitt (11a) des Trägers (11) mit dem ersten Strukturelement (2) verbunden ist und ein zweiter Abschnitt des Trägers (11b) vor dem zweiten Strukturelement (3) positioniert ist, **dadurch gekennzeichnet, dass** das zweite Strukturelement (3) eine Öffnung (23) umfasst, wobei der Träger (11) die Öffnung (23) durchquert.

2. Vorrichtung zur Montage nach Anspruch 1, **dadurch gekennzeichnet, dass** die Öffnung (23) einem Spalt entspricht.

3. Vorrichtung zur Montage nach einem der Ansprüche 1 oder 2, **dadurch gekennzeichnet, dass** die Strukturelemente (2, 3) vorne am Fahrzeug platziert sind.

4. Vorrichtung zur Montage nach einem der vorhergehenden Ansprüche, **dadurch gekennzeichnet, dass** das erste Strukturelement (2) einer Traverse entspricht, die sich senkrecht zur Längsachse X des Fahrzeugs erstreckt.

5. Vorrichtung zur Montage nach einem der vorhergehenden Ansprüche, **dadurch gekennzeichnet, dass** das zweite Element (2) einer Luftführung (3) entspricht, die für die Zirkulation von Außenluft in Richtung des Motorraums bestimmt ist.

6. Vorrichtung zur Montage nach einem der vorhergehenden Ansprüche, **dadurch gekennzeichnet, dass** die Öffnung (23) von mindestens einer Dichtlippe (26, 27) bedeckt ist, wobei die Dichtlippe (26, 27) aus einem weichen synthetischen Material hergestellt ist, das geeignet ist, sich zu verformen, und deren eines Ende frei ist, wobei der Durchgang des Trägers (11) des Radars (10) durch die Öffnung (23) gestattet wird.

7. Vorrichtung zur Montage nach Anspruch 6, **dadurch gekennzeichnet, dass** die Öffnung von zwei Lippen (26, 27) bedeckt ist, von denen mindestens ein Ende jeweils frei ist, und deren Anordnung der ersten Lippe bezogen auf die zweite Lippe den Durchgang des Trägers (11) des Radars (10) zwischen den freien Enden der Lippen (26, 27) gestattet.

8. Vorrichtung zur Montage nach einem der vorhergehenden Ansprüche, **dadurch gekennzeichnet, dass** der Träger (11) des Radars (10) von zwei parallelen Abschnitten (11a, 11b) gebildet ist, die durch einem dritten, geneigten Abschnitt (11c) verbunden sind.

9. Vorrichtung zur Montage nach einem der vorhergehenden Ansprüche, **dadurch gekennzeichnet, dass** der Träger (11) des Radars (10) mittels Befestigungsmitteln (18, 19) wie beispielsweise Schrauben, Bolzen oder jedes anderen gleichwertigen Mittels am ersten Strukturelement (2) befestigt ist.

10. Vorrichtung zur Montage nach Anspruch 9, **dadurch gekennzeichnet, dass** der Träger (11) des Radars (10) mindestens eine Auskerbung (24, 25) umfasst, die für die Montage des Trägers (11) bestimmt ist, deren Breite den Durchgang der Befestigungsmittel gestattet.

## Claims

1. Device for mounting a radar for a motor vehicle, comprising a support (11) on which the radar (10) is to be mounted, a first structure element (2) being positioned above a second structure element (3), a first portion (11a) of the support (11) being connected to the first structure element (2) and a second portion of the support (11b) being positioned in front of the second structure element (3), **characterized in that** the second structure element (3) comprises an opening (23), the support (11) passing through said opening (23).

2. Mounting device according to Claim 1, **characterized in that** the opening (23) corresponds to a slot.

3. Mounting device according to either of Claims 1 and 2, **characterized in that** the structure elements (2, 3) are placed at the front of the vehicle.

4. Mounting device according to any one of the preceding claims, **characterized in that** the first structure element (2) corresponds to a crossmember extending perpendicularly to the longitudinal axis X of the vehicle.

5. Mounting device according to any one of the preceding claims, **characterized in that** the second element (2) corresponds to an air guide (3) intended to allow outside air to flow into the engine compartment.

6. Mounting device according to any one of the preceding claims, **characterized in that** the opening (23) is covered by at least one sealing lip (26, 27), the lip (26, 27) being made of a flexible synthetic material that is capable of deforming, and at least one end of which is free, allowing the support (11) of the radar (10) to pass through the opening (23).

7. Mounting device according to Claim 6, **characterized in that** the opening is covered by two lips (26, 27), at least one end of each of which is free, and wherein the arrangement of the first lip with respect to the second lip allows the support (11) of the radar (10) to pass between the free ends of said lips (26, 27).

8. Mounting device according to any one of the preceding claims, **characterized in that** the radar (10) support (11) is formed of two parallel portions (11a, 11b) that are linked by a third, inclined portion (11c).

9. Mounting device according to any one of the preceding claims, **characterized in that** the radar (10) support (11) is attached to the first structure element (2) via fastening means (18, 19) such as screws, bolts or any other equivalent means.

10. Mounting device according to Claim 9, **characterized in that** the radar (10) support (11) comprises at least one notch (24, 25) intended for the mounting of the support (11), the width of which allows the fastening means to pass.
